Europäisches Patentamt

European Patent Office

Office européen des brevets

(19)

(11) Numéro de publication: **0 274 973**
**B1**

(12)  **FASCICULE DE BREVET EUROPEEN**

(45) Date de publication du fascicule du brevet:
25.04.90

(21) Numéro de dépôt: **87430036.1**

(22) Date de dépôt: **04.12.87**

(51) Int. Cl.⁴: **A47J 36/28**

(54) Dispositifs autonomes pour chauffer des récipients alimentaires.

(30) Priorité: **05.12.86 FR 8617163**

(43) Date de publication de la demande:
**20.07.88 Bulletin 88/29**

(45) Mention de la délivrance du brevet:
**25.04.90 Bulletin 90/17**

(84) Etats contractants désignés:
**AT BE CH DE ES GB IT LI NL SE**

(56) Documents cités:
**EP-A- 0 079 286**
**CH-A- 553 692**
**FR-A- 2 348 121**
**FR-A- 2 574 527**
**US-A- 3 871 357**
**US-A- 3 874 557**

(73) Titulaire: **Charvin, Guy, Parc Saint Honoré Chemin de la Peyrigoue, F-06600 Antibes(FR)**

(72) Inventeur: **Charvin, Guy, Parc Saint Honoré Chemin de la Peyrigoue, F-06600 Antibes(FR)**

(74) Mandataire: **Azais, Henri et al, c/o CABINET BEAU DE LOMENIE "Prado-Mermoz" 232, Avenue du Prado, F-13008 Marseille(FR)**

ACTORUM AG

## Description

La présente invention a pour objet des dispositifs autonomes pour chauffer des récipients alimentaires.

Le secteur technique de l'invention est celui de la fabrication des plats cuisinés et autres conserves alimentaires.

On connaît déjà des dispositifs jetables après usage destinés à chauffer rapidement des récipients du type barquette ou boîte de conserve stérilisée contenant un plat cuisiné, sans avoir à utiliser des moyens de chauffage traditionnels tels que des réchauds à gaz ou électriques.

Ces dispositifs connus comportent un bac jetable après usage, dans le fond duquel on place deux réactifs qui donnent naissance à une réaction exothermique lorsqu'on les met en contact l'un de l'autre.

Le bac jetable peut recevoir, en outre, un récipient alimentaire du type barquette ou boîte de conserve.

Avant de consommer les aliments contenus dans le récipient, on provoque la mise en contact des deux réactifs et le contenu du récipient alimentaire est chauffé rapidement par la chaleur due à la réaction exothermique.

Les deux réactifs sont avantageusement de la chaux vive et de l'eau qui sont des réactifs très peu onéreux, dont le mélange dégage suffisamment de chaleur sans donner naissance à aucun produit nocif.

Ces dispositifs connus sont destinés à mettre à la disposition de tous ceux qui doivent s'alimenter dans des conditions qui ne permettent de faire du feu, des moyens leur permettant de manger des aliments chauds. Ils sont destinés, notamment aux soldats en campagne ou en manœuvres, aux campeurs, aux alpinistes, aux routiers et éventuellement à ceux qui doivent s'alimenter sur des chantiers ou hors de chez eux.

Le brevet EP-A-0 079 286 (S. BENMUSSA) décrit des dispositifs de ce type connu comportant un conteneur de protection jetable après usage, qui contient dans son fond une barquette de chauffe, qui contient une poche en matière plastique qui est remplie d'eau et entourée de chaux vive et qui est munie d'un cordon de déchirure que l'on tire au moment où l'on veut provoquer la réaction exothermique.

La publication FR-A 2 348 121 décrit un dispositif du même type. Le brevet US-A 3 871 357 décrit des dispositifs du même type comportant une poche remplie d'eau et une languette munie d'une lame tranchante qui permet de décrire la poche à eau.

Les dispositifs selon l'invention sont des dispositifs qui comportent, de façon connue, un bac jetable après usage comportant un compartiment supérieur qui contient un récipient alimentaire que l'on désire chauffer et un compartiment inférieur qui contient deux réactifs qui donnent naissance à une réaction exothermique lorsqu'ils sont mis en contact, de préférence de la chaux vive pulvérulente et de l'eau, ces deux réactifs étant séparés l'un de l'autre par une ou plusieurs parois minces et étanches et le dispositif comporte des moyens pour déchirer les parois au moment où l'on désire chauffer le récipient alimentaire.

Les objectifs de l'invention sont atteints au moyen d'un dispositif dans lequel les moyens pour déchirer les parois étanches comportent au moins un arbre qui porte des couteaux radiaux et une tête de manœuvre apparente à l'extérieur du bac qui permet de manœuvrer ledit arbre en rotation et ils comportent, en outre, au moins une grille qui est disposée entre ledit arbre et l'une desdites parois étanches laquelle grille comporte des ouvertures perpendiculaires audit arbre de sorte que lorsque ledit arbre est au repos lesdits couteaux sont parallèles à ladite grille et sont séparés de ladite paroi par ladite grille et en faisant pivoter ledit arbre au moyen de ladite tête de manœuvre on engage les couteaux à travers lesdites ouvertures pour déchirer ladite paroi étanche.

Selon un mode de réalisation préférentiel, le compartiment inférieur contient une première poche en matière plastique remplie de chaux vive qui est posée dans le fond dudit bac et il contient une deuxième poche en matière plastique remplie d'eau qui est placée au-dessus de la poche de chaux vive et lesdites grilles ainsi que ledit axe portant les couteaux sont intercalés entre les deux poches.

Selon un mode de réalisation préférentiel, les couteaux sont disposés dans des plans transversaux situés entre les ouvertures desdites grilles, de sorte que lesdits couteaux viennent buter contre lesdites grilles si l'on tourne ladite tête de manœuvre et ledit axe peut coulisser longitudinalement pour amener lesdits couteaux en face desdites ouvertures transversales desdites grilles. Avantageusement, la tête de manœuvre est reliée au bac par un organe de sécurité tel qu'une goupille cisaillable ou un sceau déchirable. Selon un mode de réalisation préférentiel, l'axe porte des couteaux qui sont décalés angulairement, de sorte qu'il est possible de régler l'allure de chauffage.

L'invention a pour résultat de nouveaux dispositifs autonomes permettant de réchauffer des plats cuisinés au moment de les consommer.

Les dispositifs jetables selon l'invention, qui comportent de la chaux vive et de l'eau enfermées dans des poches en matière plastiques, sont peu onéreux à fabriquer car les réactifs sont très économiques et la mise en sac étanche de ceux-ci est une opération facile à réaliser économiquement en grande série.

De plus, les poches étanches évitent que la chaux vive n'absorbe de l'humidité ou que l'eau ne risque de venir au contact de la chaux pendant le stockage et le transport.

Les dispositifs selon l'invention comportant un axe muni de couteaux permettent d'obtenir un dégagement de calories progressif et de régler la vitesse de chauffe en agissant sur le degré de rotation du bouton de commande comme sur les boutons de commande d'un brûleur à gaz ou d'une plaque chauffante électrique.

Les dispositifs selon l'invention comportant un axe portant des couteaux décalés angulairement permettent de mieux régler l'allure de chauffage.

La ou les grilles qui entourent l'axe portant les couteaux confèrent une bonne sécurité du fait qu'elles empêchent les couteaux de découper accidentellement les parois étanches.

Les modes de réalisation dans lesquels l'axe doit être décalé axialement avant de pouvoir le faire pivoter et dans lesquels l'axe est muni d'une goupille de sécurité cisaillable, accroissent encore la sécurité d'emploi.

La description suivante se réfère aux dessins annexés qui représentent, sans aucun caractère limitatif, des exemples de réalisation de dispositifs selon l'invention.

La figure 1 est une coupe longitudinale d'un dispositif selon l'invention.

La figure 2 est une coupe selon II-II de la figure 1 avec arrachement partiel de la plaque perforée et sans la poche à eau.

La figure 3 est une coupe transversale de la figure 1.

La figure 4 est une coupe transversale d'une variante de réalisation.

Les figures 5, 6 et 7 représentent une coupe longitudinale et des coupes axiales d'une variante de réalisation comportant une seule grille.

La figure 8 représente une coupe transversale d'une autre variante de réalisation.

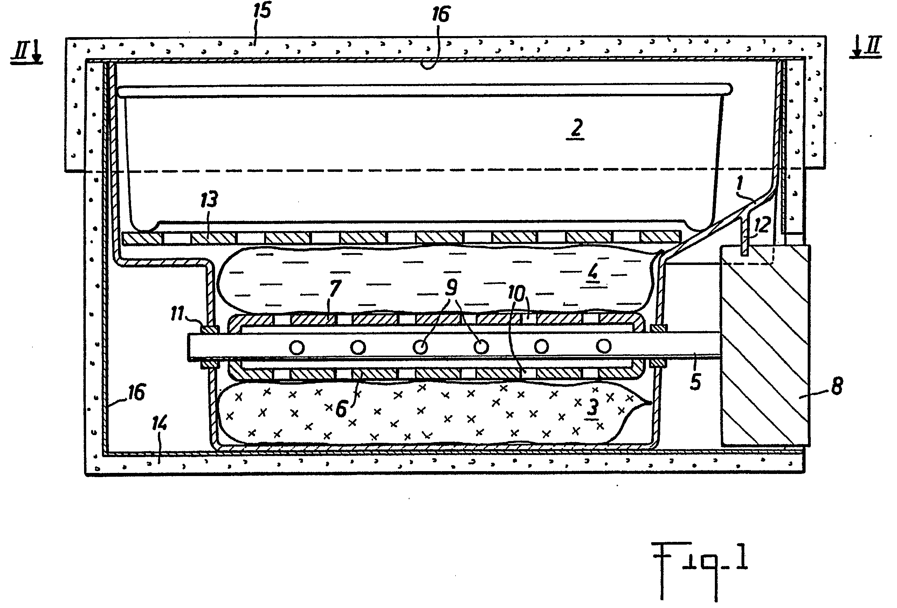

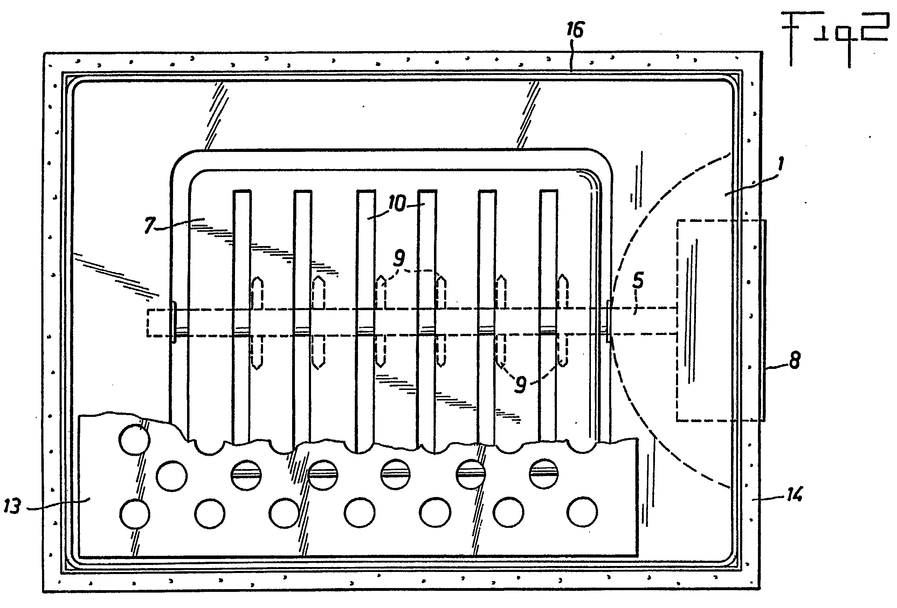

Les figures 1, 2 et 3 représentent un mode de réalisation préférentiel d'un dispositif selon l'invention. Ce dispositif comporte un bac 1 qui est jetable après usage. Le bac 1 est construit avantageusement en matière plastique, par exemple en polyéthylène ou en polypropylène, en polyester ou en chlorure de polyvinyle. Le bac 1 est destiné à recevoir dans sa partie supérieure un récipient alimentaire 2, qui est par exemple une barquette rectangulaire en feuille d'aluminium ou une boîte de conserve étanche, contenant un produit alimentaire, par exemple un plat préparé stérilisé. Le bac 1 épouse la forme du récipient 2 qu'il doit contenir et qui peut présenter des formes variées.

Le but du dispositif selon l'invention est de permettre de chauffer les aliments contenus dans le récipient 2, juste avant que ceux-ci soient consommés.

Avantageusement, le dispositif selon l'invention est conçu pour maintenir les aliments au chaud pendant qu'ils sont consommés.

Le bac 1 contient une première poche en matière plastique 3, qui est remplie de chaux vive et qui est scellée de façon hermétique. La poche 3 est posée dans le fond du bac 1. Elle contient une quantité de chaux vive qui peut varier par exemple entre 100 g et 250 g, selon la taille du récipient 2. Le bac 1 contient une deuxième poche étanche en matière plastique 4 qui contient de l'eau, le poids d'eau étant par exemple de l'ordre de 1,5 fois le poids de chaux vive.

Le bac 1 comporte un axe horizontal 5 qui est disposé entre deux grilles 6 et 7, qui sont placées entre les deux poches 3 et 4.

L'axe 5 porte à l'une de ses extrémités une tête de manoeuvre 8, par exemple un bouton ou une poignée qui est apparente à l'extérieur du bac et qui permet de manoeuvrer l'axe 5 en rotation et éventuellement en translation axiale.

La figure 1 représente un mode de réalisation dans lequel le bac 1 comporte un logement en creux à l'intérieur duquel le bouton 8 est logé, de sorte qu'il est protégé par le bac.

L'arbre 5 porte des couteaux 9 qui sont constitués par exemple par des broches pointues implantées radialement sur l'arbre 5 et diamétralement opposées.

Les grilles 6 et 7 sont avantageusement deux plaques en matière plastique galbées le long de leurs bords longitudinaux qui sont appliqués l'un contre l'autre, comme on peut le voir sur la figure 3, de sorte que les deux plaques délimitent une cage à l'intérieur de laquelle l'arbre 5 et les couteaux 9 sont contenus au repos.

Les grilles 6 et 7 comportent des ouvertures transversales 10 qui sont allongées dans le sens perpendiculaire à l'axe 5.

Le nombre d'ouvertures 10 est égal ou supérieur au nombre de couteaux 9.

Les figures 1 à 3 représentent un mode de réalisation préférentiel, dans lequel l'arbre 5 est monté dans des coussinets 11, dans lesquels il peut tourner et également se déplacer axialement.

Les figures 1 à 3 représentent le dispositif au repos, c'est-à-dire en dehors de la période de chauffage. Les couteaux 9 sont alors situés dans le plan horizontal de l'arbre 5 et ils sont décalés longitudinalement par rapport aux ouvertures 10, de sorte que si l'on tourne le bouton 8 sans l'avoir déplacé axialement, les couteaux 9 butent contre les grilles, ce qui constitue une première sécurité qui évite que les poches 3 et 4 ne puissent être coupées accidentellement par les couteaux pendant les manutentions. De plus, le bouton 8 est relié au bac 1 par une goupille cisaillable 12 et il faut forcer sur le bouton 8 pour cisailler la goupille 12 avant de pouvoir manoeuvrer le bouton, ce qui constitue une deuxième sécurité.

En variante, on peut utiliser une seule sécurité. On peut supprimer la goupille cisaillable 12 ou on peut prévoir un axe 5 non déplaçable en translation et, dans ce cas, les couteaux 9 sont placés en regard des ouvertures 10 et la goupille 12 interdit la rotation de l'arbre tant qu'elle n'a pas été cisaillée.

Un dispositif selon l'invention comporte, en outre, une cloison ajourée 13, par exemple une plaque perforée ou une grille, qui est placée au-dessus de la poche à eau 4 et qui divise le bac 1 en deux compartiments, un compartiment inférieur qui contient les poches 3 et 4 contenant les réactifs de chauffage et le mécanisme de déchirure des poches et un compartiment supérieur qui contient le récipient alimentaire 2 qui doit être chauffé.

Avantageusement, le dispositif qui vient d'être décrit est placé à l'intérieur d'un conteneur isolant thermique 14 équipé d'un couvercle 15.

Les figures 1 à 3 représentent un mode de réalisation dans lequel le conteneur 14 et le couvercle 15 sont en un matériau cellulaire bon isolant thermique et peu onéreux, par exemple en polystyrène expansé ou en mousse de polyuréthane.

Avantageusement, les parois internes du conteneur 14 et du couvercle 15 portent un revêtement réflecteur 16, par exemple une feuille de matière plastique aluminisée qui réfléchit les rayonnements thermiques émis par le bac 1.

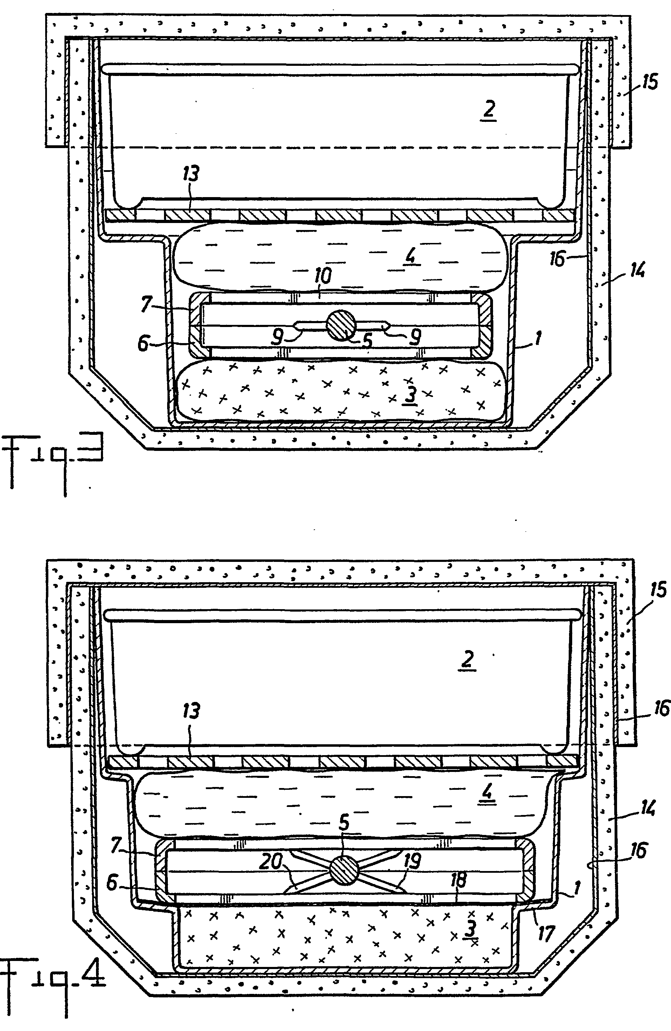

La figure 4 est une coupe transversale d'une variante de réalisation. Les parties homologues sont représentées par les mêmes repères sur les figures 3 et 4.

Dans la variante selon la figure 3, la chaux vive pulvérulente 3 est placée dans le fond du bac 1.

Le bac comporte un épaulement 17, sur lequel est collée ou thermosoudée de façon étanche, une - membrane 18 qui isole le compartiment inférieur contenant la chaux. On retrouve au-dessus de la membrane 18 les deux grilles 6 et 7 qui délimitent une cage dans laquelle tourne l'arbre 5 portant les couteaux.

Lorsqu'on fait tourner l'axe 5, les couteaux 9 coupent la membrane 18 et la poche à eau 4 et l'eau s'écoule progressivement vers la chaux.

On a représenté sur la figure 4 un arbre 5 portant des couteaux 19 et 20 qui sont décalés angulairement. Cette disposition permet d'obtenir des allures de chauffe différentes. Si l'on tourne le bouton de manoeuvre 8 d'un huitième de tour, dans le sens des aiguilles d'une montre, seuls les couteaux 19 découpent la membrane étanche 18 et la poche à eau 4, de sorte que le nombre d'entailles est réduit et la réaction exothermique est plus lente.

Si on tourne le bouton de manoeuvre 8 d'un quart de tour, les couteaux 20 agissent également et la réaction se produit plus rapidement.

Bien entendu, l'arbre représenté sur la figure 4 portant des couteaux décalés angulairement peut être utilisé sur un dispositif selon la figure 3 et inversement un arbre selon la figure 3 peut être utilisé avec un dispositif selon la figure 4.

On voit que le mécanisme à couteaux montés sur un axe portant un bouton de manoeuvre qui doit être poussé axialement puis tourné plus ou moins pour régler l'allure de chauffe reproduit le type de commande à boutons existant sur les brûleurs à gaz ou électriques,ce qui facilite l'utilisation des dispositifs selon l'invention.

Un avantage important des dispositifs selon l'invention réside dans le fait que les couteaux montés sur un axe font,dans la membrane inférieure 18 ou dans la poche contenant la chaux et dans la poche à eau, des fentes qui sont diamétralement opposées par rapport à l'axe 5, tant que le bouton de manoeuvre 8 a fait moins d'un quart de tour. Il en résulte que l'eau qui s'écoule de la poche à eau arrive très progressivement au contact de la chaux et que l'on peut régler la vitesse de chauffage en tournant plus ou moins le bouton de manoeuvre. On évite ainsi de produire une réaction exothermique trop rapide qui conduit à uneperte élevée de calories et à une mauvaise répartition de température dans les aliments contenus dans le récipient 2, si ceux-ci sont mauvais conducteurs thermiques, ce qui est souvent le cas.

De plus, on sait que les qualités organoleptiques des aliments sont souvent liées à la vitesse de chauffe et les dispositifs selon l'invention permettent d'obtenir une montée en température progressive qui préserve le goût et la qualité des plats cuisinés.

La description qui précède concerne des dispositifs comportant un seul axe 5 muni de couteaux. Il est précisé que l'invention s'étend au cas de dispositifs qui comporteraient plusieurs axes munis de couteaux, ce qui permettrait d'obtenir encore plus de possibilités de réglage de la vitesse de chauffage.

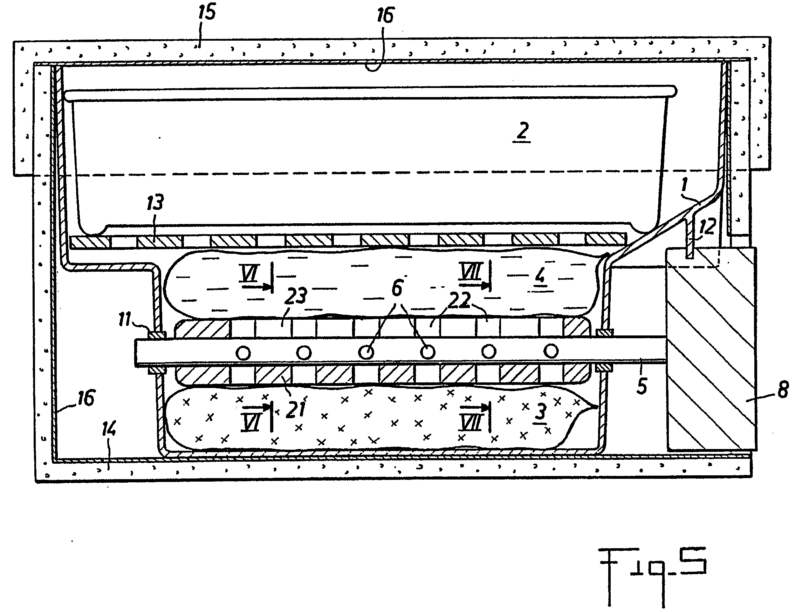

La figure 5 représente une coupe axiale d'une autre mode de réalisation. Les parties homologues sont représentées par les mêmes repères sur les figures 1 à 5.

Dans cet exemple, le dispositif comporte une seule grille 21, qui est intercalée entre les deux poches 3 et 4 et qui comporte des ouvertures transversales 22. L'arbre 5 portant des couteaux radiaux 6 est placé dans des encoches longitudinales 23 qui forment des paliers. Les couteaux 6 sont situés dans les plans transversaux des ouvertures 22.

La figure 6 est une coupe transversale selon VI-VI de l'axe et de la grille passant par un palier.

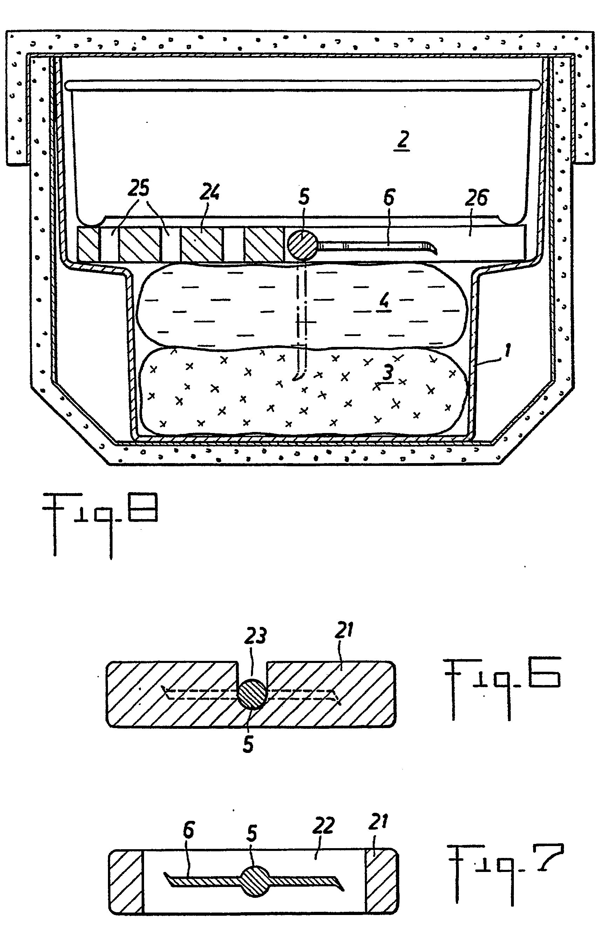

La figure 7 est une coupe transversale selon VII-VII passant par l'axe d'une ouverture 22.

Au repos, les couteaux 6 sont placés dans l'épaisseur de la grille qui les protège et évite que ceux-ci ne déchirent les poches. Lorsqu'on tourne le bouton 8, les couteaux 6 pivotent dans les ouvertures 22 et ils dépassent hors des parois supérieure et inférieure de la grille en déchirant les poches 3 et 4.

La figure 8 représente une coupe transversale d'un autre mode de réalisation. Les parties homologues sont représentées par les mêmes repères sur les figures 3, 4 et 8.

Dans cet exemple, le dispositif comporte une grille 24 qui est disposée sous la barquette à réchauffer 2 et au-dessus de la poche à eau 4 qui est popsée sur la poche de chaux vive 3, placée dans le fond du bac 1. La grille 24 comporte des perforations 25 pour le passage de la vapeur. L'arbre 5 porte des couteaux radiaux 6 s'étendant d'un seul côté. Au repos, ces couteaux sont logés dans des ouvertures 26 de la grille 24 qui s'étendent du même côté que les couteaux. Les couteaux 6 ont une longueur suffisante pour atteindre et déchirer le dessus de la poche à chaux 3 lorsque le bouton 8 est manoeuvré. Les couteaux sont représentés en pointillés dans cette position.

Les figures 1 et 5 représentent un bouton 8 qui est relié au bac 1 par une goupille cisaillable 12. Il est précisé que cette goupille peut être remplacée par d'autres organes de sécurité équivalents par exemple par un sceau déchirable ou arrachable.

## Revendications

1. Dispositif autonome pour chauffer un récipient alimentaire (2) du type comportant un bac (1) jetable après usage comportant un compartiment supérieur qui contient ledit récipient alimentaire et un compartiment inférieur qui contient deux réactifs, avantageusement de l'eau et de la chaux vive pulvérulente, qui sont séparés l'un de l'autre par une ou plusieurs parois étanches et des moyens pour déchirer lesdites parois afin de mélanger les deux réactifs pour obtenir une réaction exothermique caractérisé en ce que lesdits moyens comportent au moins un arbre (5) portant des couteaux radiaux (9) et une tête de manœuvre (8) apparente à l'extérieur dudit bac qui permet de manœuvrer ledit arbre en rotation et ils comportent, en outre, au moins une grille (6, 7) qui est disposée entre ledit arbre (5) et l'une desdites parois étanches, laquelle grille comporte des ouvertures (10) perpendiculaires audit arbre (5) de sorte que lorsque ledit arbre est au repos lesdits couteaux sont parallèles à ladite grille et sont séparés de ladite paroi par ladite grille et en faisant pivoter ledit arbre au moyen de ladite tête de manœuvre on engage les couteaux à travers lesdites ouvertures (10) pour déchirer ladite paroi étanche.

2. Dispositif selon la revendication 1, caractérisé en ce qu'il comporte deux grilles qui forment une cage à l'intérieur de laquelle se trouve ledit axe et lesdits couteaux en position de repos.

3. Dispositif selon l'une quelconque des revendications 1 et 2, caractérisé en ce que ledit compartiment inférieur contient une première poche en matière plastique (3) remplie de chaux vive qui est posée dans le fond dudit bac (1) et il contient une deuxième poche en matière plastique (4) remplie d'eau qui est placée au-dessus de la poche de chaux vive et ledit axe (5) portant les couteaux est intercalé entre les deux poches.

4. Dispositif selon l'une quelconque des revendications 2 et 3, caractérisé en ce que, au repos, lesdits couteaux (9) sont disposés dans des plans transversaux situés entre les ouvertures (10) desdites grilles, de sorte que lesdits couteaux viennent buter contre lesdites grilles si l'on tourne ladite tête de manœuvre (8) et ledit axe (5) peut coulisser longitudinalement pour amener lesdits couteaux en face desdites ouvertures transversales desdites grilles.

5. Dispositif selon l'un quelconque des revendications 1 à 4, caractérisé en ce que ladite tête de manœuvre (8) est reliée audit bac (1) par un organe de sécurité tel qu'une goupille cisaillable ou un sceau déchirable.

6. Dispositif selon l'un quelconque des revendications 1 à 5, caractérisé en ce que ledit axe (5) porte des couteaux (19, 20), qui sont décalés angulairement, de sorte qu'il est possible de régler l'allure de chauffage.

7. Dispositif selon l'une quelconque des revendications 1 à 5, caractérisé en ce qu'il comporte une cloison ajourée (13) qui sépare les compartiments supérieur et inférieur.

8. Dispositif selon l'une quelconque des revendications 1 à 6, caractérisé en ce qu'il comporte, en outre, un conteneur (14) et un couvercle (15) en un matériau isolant thermique à l'intérieur duquel ledit bac est placé.

9. Dispositif selon la revendication 8, caractérisé en ce que les parois internes dudit conteneur et dudit couvercle portent un revêtement réfléchissant (16).

10. Dispositif selon la revendication 1, caractérisé en ce que la chaux vive est placée dans le fond dudit bac (1) dans un compartiment qui est isolé par une membrane (18) collée ou soudée de façon étanche sur un épaulement (17) dudit bac.

**Claims**

1. Autonomous device to heat a food container (2) of the type comprising a disposable tray (1) with an upper compartment which contains said food container and a lower compartment which contains two reagents, advantageously water and powdery quicklime, which are separated from each other by one or more watertight partitions and having the means to tear said partitions in order to mix the two reagents in order to obtain an exothermal reaction, characterized in that said means comprise at least one shaft (5) carrying radial blades (9) and a control knob (8) visible outside said tray permitting the control in rotation of the shaft, and they comprise at least one screen (6, 7) which is provided between said shaft (5) and one of said watertight partitions, said screen comprising openings (10) perpendicular to said shaft (5) so that when said shaft is idle, said blades are parallel to said screen and are separated from said partition by said screen and the fact of pivoting said shaft by means of said control knob causes the blades to be engaged through said openings (10) in order to tear said partition.

2. Device according to claim 1, characterized in that it comprises two screens which form a frame, inside which said axis and blades are located when idle.

3. Device according to any one of claims 1 and 2, characterized in that said lower compartment contains a first plastic bag (3) filled with quicklime and placed at the bottom of said tray (1), and containing a second plastic bag (4) filled with water and placed on top of the quicklime bag and said shaft (5) with blades is interposed between the two bags.

4. Device according to any one of claims 2 and 3, characterized in that when idle, said blades (9) are arranged in crosswise planes located between the orifices (10) of said screens, in such a way that said blades abut against said screens if the control knob (8) is turned and said shaft (5) can slide lengthwise in order to bring the blades facing the crosswise orifices of said screens.

5. Device according to any one of claims 1 to 4, characterized in that said control knob (8) is attached to said tray (1) by a safety device such as a tearable pin or a removable seal.

6. Device according to any one of claims 1 to 5, characterized in that said shaft (5) has blades (19, 20) which are shifted angularly, in such a way that it is possible to control the heating rate.

7. Device according to any one of claims 1 to 5, characterized in that it comprises a perforated partition (13) which separates the upper and lower compartments.

8. Device according to any one of claims 1 to 6, characterized in that it further comprises a container (14) and a lid (15) made of a thermic insulating material inside which said tray is placed.

9. Device according to claim 8, characterized in that the internal partitions of said container and lid have a reflecting lining (16).

10. Device according to claim 1, characterized in that the quicklime is placed at the bottom of said tray (1) in a compartment that is insulated by a membrane (18) that is either impermeably glued or soldered to a wall (17) of said tray.

## Patentansprüche

1. Autonome Vorrichtung zum Wärmen eines Nahrungsmittelgefäßes (2), umfassend einen nach Gebrauch wegwerfbaren Behälter (1) mit einem oberen Abteil zur Aufnahme des Nahrungsmittelgefäßes und einem unteren Abteil zur Aufnahme zweier Reagenzien, vorteilhafterweise von Wasser und pulverförmigem ungelöschtem Kalk, die durch eine oder mehrere dichte Wände voneinander getrennt sind, und Mittel zum Durchtrennen der Wände zwecks Mischens der beiden Reagenzien zur Erzielung einer exothermen Reaktion, dadurch gekennzeichnet, daß diese Mittel mindestens eine Achse (5) umfassen, die radiale Messer (9) und einen außerhalb des Behälters in Erscheinung tretenden Betätigungsknauf (8) zur Rotationsbetätigung der Achse trägt, und sie weiters mindestens einen Rost (6, 7) umfassen, der zwischen der Achse (5) und einer der dichten Wände liegt und zur Achse (5) senkrechte Öffnungen (10) aufweist, sodaß die Messer bei Ruhestellung der Achse parallel zum Rost stehen und durch den Rost von der Wand getrennt sind und bei Verschwenken der Achse mittels des Betätigungsknaufes durch die Öffnungen (10) dringen, um die dichte Wand zu zerreißen.

2. Vorrichtung nach Anspruch 1, dadurch gekennzeichnet, daß sie zwei Roste umfaßt, die einen Käfig bilden, in dessen Innerem sich die Achse und die Messer in Ruhestellung befinden.

3. Vorrichtung nach einem der Ansprüche 1 und 2, dadurch gekennzeichnet, daß das untere Abteil eine erste Tasche aus Plastikmaterial (3), gefüllt mit ungelöschtem Kalk, die am Boden des Behälters (1) plaziert ist, und eine zweite Tasche aus Plastikmaterial (4), gefüllt mit Wasser, die über der Tasche mit ungelöschtem Kalk plaziert ist, enthält, und daß die messertragende Achse (5) zwischen den beiden Taschen eingesetzt ist.

4. Vorrichtung nach einem der Ansprüche 2 und 3, dadurch gekennzeichnet, daß die Messer (9) in Ruhestellung in zwischen den Öffnungen (10) der Roste befindlichen Querebenen liegen, sodaß die Messer bei Drehen des Betätigungsknaufes (8) an diesen Rosten in Anschlag kommen und die Achse (5) in Längsrichtung verschiebbar ist, um die Messer gegenüber die Queröffnungen der Roste zu bringen.

5. Vorrichtung nach einem der Ansprüche 1 bis 4, dadurch gekennzeichnet, daß der Betätigungsknauf (8) durch ein Sicherheitsorgan, wie einen Abscherstift oder einen abreißbaren Verschluß, mit dem Behälter (1) verbunden ist.

6. Vorrichtung nach einem der Ansprüche 1 bis 5, dadurch gekennzeichnet, daß die Achse (5) Messer (19, 20) trägt, die winkelförmig versetzt sind, sodaß es möglich ist, die Heizleistung zu regulieren.

7. Vorrichtung nach einem der Ansprüche 1 bis 5, dadurch gekennzeichnet, daß sie eine durchlöcherte Zwischenwand (13) umfaßt, die das obere Abteil vom unteren Abteil trennt.

8. Vorrichtung nach einem der Ansprüche 1 bis 6, dadurch gekennzeichnet, daß sie weiters einen Container (14) und einen Deckel (15) aus wärmeisolierendem Material umfaßt, in dessen Innerem sich der Behälter befindet.

9. Vorrichtung nach Anspruch 8, dadurch gekennzeichnet, daß die Innenwände des Containers und des Deckels eine reflektierende Verkleidung (16) aufweisen.

10. Vorrichtung nach Anspruch 1, dadurch gekennzeichnet, daß sich der ungelöschte Kalk am Boden des Behälters (1) in einem Abteil befindet, welches durch eine dicht an einer Schulter (17) des Behälters angeklebte oder angeschweißte Membran (18) abgetrennt ist.

Fig. 1

EP 0 274 973 B1

Fig2

EP 0 274 973 B1

Fig.3

Fig.4

Fig.5

Fig.8

Fig.6

Fig.7